# EUROPÄISCHE PATENTSCHRIFT

(11) **EP 2 024 623 B1**
(45) Veröffentlichungstag und Bekanntmachung des Hinweises auf die Patenterteilung: **02.12.2009**
(21) Anmeldenummer: 07728002.2
(22) Anmeldetag: 12.04.2007
(51) Int. Cl.: F02D 19/02, F02M 21/02

(54) **VORRICHTUNG FÜR EINE GASBETRIEBENE BRENNKRAFTMASCHINE**
DEVICE FOR A NATURAL GAS OPERATED INTERNAL COMBUSTION ENGINE
DISPOSITIF POUR UN MOTEUR À COMBUSTION INTERNE À GAZ

(30) Priorität: 24.04.2006 DE 102006018917
(43) Veröffentlichungstag der Anmeldung: 18.02.2009
(73) Patentinhaber: Continental Automotive GmbH, 30165 Hannover (DE)
(72) Erfinder: SCHÜLE, Harry, 92431 Neunburg V. Wald (DE)
(86) Internationale Anmeldenummer: PCT/EP2007/053534
(87) Internationale Veröffentlichungsnummer: WO 2007/122108

(56) Entgegenhaltungen:
- EP-A- 0 155 538
- EP-A- 0 894 968
- WO-A-95/22691
- WO-A-98/26168
- DE-A1- 3 612 994
- GB-A- 2 279 764
- NL-A- 8 600 062

## Beschreibung

Die Erfindung betrifft eine Vorrichtung zur Kraftstoffversorgung für eine gasbetriebene Brennkraftmaschine gemäß dem Oberbegriff des Anspruchs 1. Solche Vorrichtungen sind beispielsweise aus den Druckschriften NL 8600062 A, WO 98/26168 A und WO 95/22691 beschrieben.

Mit Gas betriebene Brennkraftmaschinen stellen aus wirtschaftlichen und umweltpolitischen Gründen eine Alternative zu herkömmlichen, mit Benzin oder Diesel betriebenen Brennkraftmaschinen dar. Zur Erhöhung der Flexibilität des Benutzers werden auch bivalente Brennkraftmaschinen, die sowohl mit Gas als auch beispielsweise mit Benzin betrieben werden können, eingesetzt.

Von den im Handel erhältlichen Gasarten haben sich hierzu vor allem das Liquified Petroleum Gas (LPG, Autogas) und das Compressed Natural Gas (CNG, komprimiertes Erdgas) durchgesetzt.

Da diese Gase frei von Blei- und Schwefelverbindungen sind und sehr gute Verbrennungseigenschaften bei ausgezeichneter Gemischbildung und Gemischverteilung aufweisen, reduzieren sich die Schadstoffemissionen CO, HC, NOₓ und CO₂ gegenüber Kraftfahrzeugen, die mit benzinbetriebenen oder dieselbetriebenen Brennkraftmaschinen ausgerüstet sind.

Mit Gas betriebene Systeme weisen üblicherweise einen Tank zur Speicherung des gasförmigen Brennstoffs auf. Die Speicherung des Brennstoffs erfolgt unter hohem Druck. Für Fahrzeuge, die mit Erdgas (CNG) betrieben werden, beträgt der Druck bei der Speicherung etwa 200 bar. Über Absperrventile und Druckminderer bzw. Druckregler gelangt der gasförmige Brennstoff in eine Gasinjektionsanlage. Mittels der Gasinjektionsanlage zugeordnete Gasinjektionsventile, meist als elektromagnetisch betätigte Ventile ausgeführt, wird die Brennkraftmaschine schließlich mit Gas als Brennstoff versorgt. Der Druck in der Gasinjektionsanlage ist üblicherweise konstant und liegt für erdgasbetriebene Fahrzeuge in einem Bereich zwischen 3 bar und 10 bar. Die Berechnung der zuzumessenden Gasmenge und die Ansteuerung der Gasinjektionsventile erfolgt mittels einer elektronischen Steuerungseinrichtung, die hierzu Betriebsparameter der Brennkraftmaschine, sowie Zustandsgrößen des Gases, insbesondere Temperatur und Druck auswertet.

Um die Druckminderung von annähernd 200 bar bei freier Wahl des Durchflusses zu erreichen, sind Druckregeleinheiten mit bekannten Druckminderventilen üblich. Aus der DE 195 24 413 A1 ist eine solche Druckregeleinheit einer Kraftstoffaufbereitungsanlage für gasförmigen Kraftstoff bekannt. Diese Druckregeleinheit weist ein von einer elektronischen Steuereinheit mit Taktimpulsen angesteuertes Magnetventil auf, über das auf der Niederdruckseite ein exaktes Druckniveau sowie ein genauer Durchfluss einstellbar ist.

Die Vielzahl dieser Komponenten, insbesondere die Vielzahl der elektromagnetischen, aktiven Einblaseventile, wobei für jeden Zylinder der Brennkraftmaschine ein separates Einblasventil benötigt wird, führt zu sehr hohen Systemkosten. Hierbei muss außerdem berücksichtig werden, dass nicht nur die elektromagnetischen Ventile relativ teuer sind, sondern auch der damit verbundene Aufwand für die Ansteuerung, die elektrischen Treiber und für das Steuergerät. Gerade für Brennkraftmaschinen mit einer Vielzahl von Zylindern, wie z. B. häufig bei Nutzfahrzeugen, Lastkraftwagen üblich, die 6, 8, 10 oder 12 Zylinder aufweisen, ist der Aufwand beträchtlich.

Aus diesem Grunde erscheint es vorteilhaft, wenn das Brenngas nicht zylinderindividuell, sondern zentral eingeblasen wird. Diese Vorgehensweise wird heute schon vielfach angewandt. Dabei tritt allerdings das Problem auf, dass bei Fahrzeugen, die bivalent betrieben werden, also mit 2 unterschiedlichen Kraftstoffen, beispielsweise Benzin und Gas, der Weg von der Gaseinblasestelle über die Drosselklappe sehr weit ist, so dass eine Umschaltung der Kraftstoffe zu einem merklichen Abfallen der Drehzahl führen kann, da nicht genügend Kraftstoff zum richtigen Zeitpunkt vorhanden ist. Dieses Problem muss mit einer Regelung ausgeglichen werden, in dem beide Kraftstoffe bei der Umschaltung gleichzeitig eingebracht werden. Dieses Problem stellt sich aber auch nach einer Schubabschaltung, wenn die Brennkraftmaschine geschleppt wurde und die Gaszufuhr wieder einsetzt, mit der zusätzlichen Schwierigkeit, dass dann Defizite nicht durch die Zufuhr von Benzin ausgeglichen werden können. Dabei kann sogar auftreten, dass die Brennkraftmaschine ausgeht, weil es zu lange dauert, bis wieder Kraftstoff von einem Zylinder angesaugt werden kann.

Es ist auch denkbar, das Gas nicht stromaufwärts der Drosselklappe sondern stromabwärts der Drosselklappe zentral zuzumessen. Dabei sind zwar die Wege für den Gasstrom kürzer, aber die Gemischaufbereitung ist schlechter, weil das Gas nicht mehr gezwungen wird, sich im engen Spalt der Drosselklappe zu verwirbeln und zu vermischen.

Des Weiteren führt der lange Kraftstoffweg vom Ort der zentralen Gaseinblasung bis zu den einzelnen Zylindern gegenüber einer zylinderindividuellen Gaseinblasung (Multiinjection) zu einem Verlust in der Dynamik der Brennkraftmaschine. Insbesondere nach dem Wiedereinsetzen der Gaseinblasung nach einer Schubabschaltung muss zunächst das gesamte Saugrohr mit einem homogenen und brennbaren Gasgemisch gefüllt werden. Eine zentrale Gaseinblasung birgt außerdem die Gefahr einer Rückzündung durch eine Entzündung des homogenen und brennbaren Frischgases mit Hilfe von Flammen bei der Öffnung eines Einlassventils.

Die Aufgabe der Erfindung ist es, eine kostengünstige Vorrichtung zur Verringerung der Schadstoffemissionen und Leistungssteigerung von gasbetriebenen Brennkraftmaschinen zur Verfügung zu stellen.

Die Aufgabe wird gelöst durch die Merkmale des unabhängigen Patentanspruches. Vorteilhafte Ausgestaltungen der Erfindung sind in den Unteransprüchen gekennzeichnet.

Die Erfindung zeichnet sich aus durch eine Vorrichtung zur Kraftstoffversorgung für eine gasbetriebene, mehrere Zylinder aufweisende Brennkraftmaschine bei dem ein zum Betrieb der Brennkraftmaschine bestimmtes Gas in einem Gastank unter hohem Druck gespeichert wird und mittels einer Dosiereinheit der Druck auf einen niederen Überdruck reduziert wird und den Brennräumen zugeführt wird. Die Dosiereinheit ist dabei als zentrale Dosiereinheit für alle Zylinder ausgebildet, welche das Gas mit niederem Überdruck in eine, allen Zylindern zugeordnete Verteilereinrichtung einbringt und das Gas von der Verteilereinrichtung mittels einzelner, der Anzahl der Zylinder entsprechenden separaten Gasversorgungsleitungen zu den Zylindern zugeführt wird. Dabei sind Drucksensoren und Temperatursensoren auf der Hochdruckseite und der Niederdruckseite des Gasversorgungssystems vorgesehen und diese Sensoren, sowie die zentrale Dosiereinheit und die Verteilereinrichtung zu einer baulichen Einheit zusammengefasst.

Da die Drucksensoren und Temperatursensoren auf der Hochdruckseite und der Niederdruckseite des Gasversorgungssystems, sowie die zentrale Dosiereinheit und die Verteilereinrichtung zu einer baulichen Einheit zusammengefasst sind, ergibt sich eine sehr kompakte Einheit, die wenig Platz im Fahrzeug-beansprucht.

Durch die Verwendung nur einer zentralen Dosiereinheit für alle Zylinder der Brennkraftmaschine wird die Anzahl der aktiven Bauelemente, insbesondere die beim Stand der Technik für jeden Zylinder nötigen elektromagnetischen Ventile reduziert, was sich positiv in den Gesamtkosten der Systemanlage auswirkt. Dadurch reduziert sich auch der Aufwand an elektronischen Treiberstufen, der Verkabelungsaufwand und die Anzahl der Steckverbindungen. Darüber hinaus wird auch der Aufwand zur Diagnose der aktiven Bauelemente vermindert.

Des Weiteren ergibt sich der Vorteil, dass die zur Verbrennung des Gases erforderliche Luft über die Drosselklappe unabhängig von der Gasmenge geregelt werden, da die zwei Gase über unterschiedliche Leitungen zu den Zylindereingängen (Ansaugrohren) gelangen. Dadurch ergibt sich eine bessere Dynamik bei Laständerungen, Schubabschaltung und bei der Lambdaregelung. Außerdem werden die Schadstoffe, insbesondere die Emissionen in Folge von unverbranntem Erdgas bei unvollständiger und nicht brennbarem Gemisch deutlich reduziert. Auch das Umschalten von Benzinbetrieb zum Gasbetrieb und umgekehrt kann einfacher realisiert werden.

Darüber hinaus kann ein Rückzünden von homogen vermischten, brennbaren Gasluftgemisch im Saugrohr verhindert werden, da sich ein sehr fettes, nicht brennbares Gasgemisch am Einlass zum Zylinder sammelt.

Durch den Wegfall einzelner, der Zylinderzahl entsprechender elektromagnetisch angetriebener Gasinjektoren können an den freien Enden der separaten Gasversorgungsleitungen einfach gestaltete, kostengünstig herstellbare Gaseinblasedüsen verwendet werden. Es muss nur gewährleistet werden, dass alle Düsen den gleichen Querschnitt aufweisen.

Besonders vorteilhaft ist es, die Entspannung und Zumessung des Gases in der zentralen Dosiereinheit mittels eines piezoelektrischen Stellgliedes vorzunehmen. Damit können sehr exakte und schnelle Zumessungen des Gases erfolgen. Der Hub des Piezostellgliedes und damit u.a. die Gasmenge kann leicht in Abhängigkeit der angelegten Spannung z.B. als Funktion von Last und Drehzahl geändert werden.

Weisen die separaten Gasversorgungsleitungen zu den einzelnen Zylindern gleiche Längen auf, so haben möglicherweise auftretende Druckschwingungen keine unterschiedlichen Einflüsse auf die einzubringende Gasmenge.

Weitere vorteilhafte Ausgestaltungen und Weiterbildungen ergeben sich anhand der Beschreibung.

Ausführungsbeispiele der Erfindung werden im Folgenden anhand der schematischen Zeichnungen erläutert. Es zeigen:
- Figur 1: eine schematische Darstellung einer gasbetriebenen Brennkraftmaschine und
- Figur 2: den schematischen Aufbau einer zentralen Dosierein- heit.

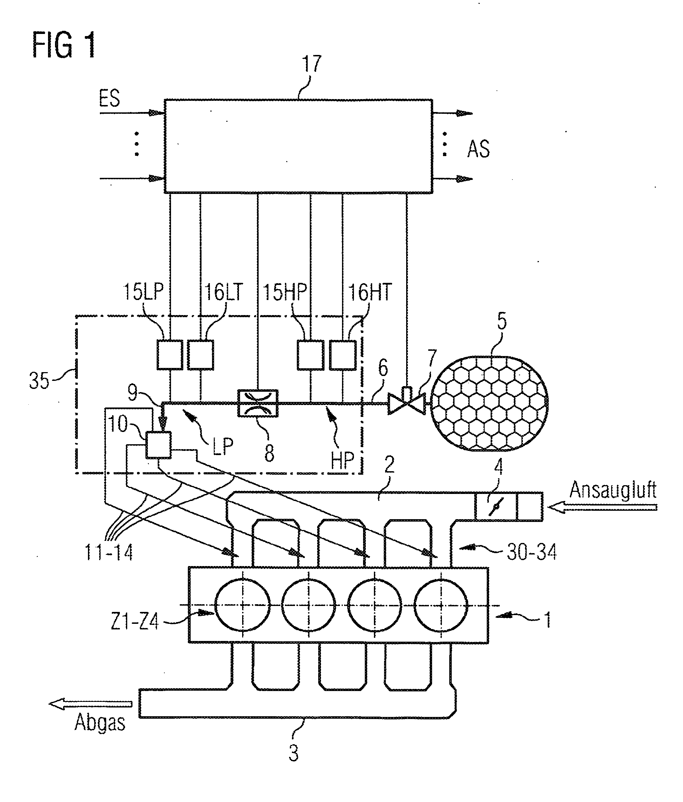

Figur 1 zeigt die schematische Darstellung einer gasbetriebenen Brennkraftmaschine 1, wobei nur die für das Verständnis der Erfindung nötigen Komponenten dargestellt sind. Insbesondere ist die für die Zündung des Gas-/Luftgemisches nötige Zündeinrichtung weggelassen. Die Erfindung wird anhand einer Brennkraftmaschine mit 4 Zylindern Z1-Z4 erläutert, sie ist aber auch für jede andere Brennkraftmaschine anwendbar, deren Zylinderzahl ≥ 2 ist. Der Brennkraftmaschine 1 ist ein Ansaugtrakt 2 und ein Abgastrakt 3 zugeordnet, die mittels nicht dargestellter Einlassventile und Auslassventile mit den Brennräumen der Zylinder Z1-Z4 der Brennkraftmaschine in Verbindung stehen. Die zur Verbrennung nötige Ansaugluft gelangt über eine Drosselklappe 4 in den Ansaugtrakt 2 und in die den einzelnen Zylindern Z1-Z4 zugeordneten Saugrohre. Nach der Verbrennung strömt das Abgas über den Abgastrakt 3 und einen nicht dargestellten Abgaskatalysator und einen Schalldämpfer in die Umgebung.

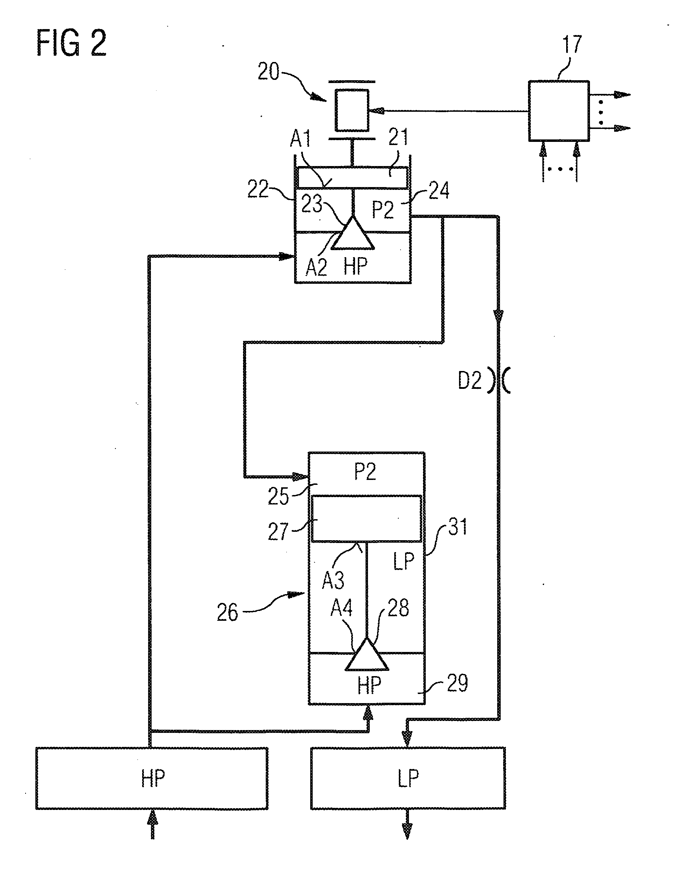

Der gasförmige Kraftstoff wird in einem Gasspeicher, beispielsweise in Form eines flaschenförmigen Tanks 5 unter hohem Druck gespeichert. Für erdgasbetriebene Brennkraftmaschinen 1 beträgt der Druck bei der Speicherung etwa 200 bar. Über eine Hochdruckleitung 6 wird der gasförmige Kraftstoff über ein Absperrventil 7 einer zentralen Dosiereinheit 8 zugeführt. Der Aufbau der zentralen Dosiereinheit 8, welche die Funktion des herkömmlichen Druckminderers und/oder Druckreglers als auch die Zumessung des Gases übernimmt, wird später anhand der Figur 2 noch näher erläutert.

Über das Absperrventil 7, das bevorzugt direkt am Anfang der Hochdruckleitung 6, d.h. unmittelbar am Tank 5 angeordnet ist und in der Regel als elektromagnetisch ansteuerbares EIN/AUS -Ventil (shut-off valve) ausgestaltet ist, kann die Gaszufuhr aus dem Tank 5 gesperrt werden, wie es z. B. bei einem Abstellen der Brennkraftmaschine 1 oder bei der Umschaltung auf eine andere Kraftstoffart bei bivalenten Brennkraftmaschinen aus Sicherheitsgründen erforderlich ist.

Der Ausgang der zentralen Dosiereinheit 8 ist über eine Niederdruckleitung 9 mit einer Verteilereinheit 10 verbunden. Von dieser Verteilereinheit 10 führen separate Gasversorgungsleitungen 11-14 zu den einzelnen Ansaugrohren der Brennkraftmaschine 1. Als separate Gasversorgungsleitungen können starre Leitungen oder aber auch flexible Leitungen, z.B. Schlauchleitungen verwendet werden. An den freien Enden der einzelnen Gasversorgungsleitungen 11-14 sind Gaseinblasedüsen 30-34 vorgesehen, mit deren Hilfe das Gas in die entsprechenden Ansaugrohre eingeblasen wird.

Sowohl stromaufwärts der zentralen Dosiereinheit 8 als auch stromabwärts der zentralen Dosiereinheit 8, d.h. im Hochdruckbereich und im Niederdruckbereich der Gasanlage sind jeweils Sensoren für den Druck 15HP, 15LP und Sensoren für die Temperatur 16HT, 16LT des Gases vorgesehen.

Ferner ist eine Steuereinrichtung 17 vorgesehen, der Sensoren zugeordnet sind, die verschiedene Messgrößen erfassen und jeweils den Messwert der Messgröße ermitteln. Die Steuereinrichtung 17 ermittelt abhängig von mindestens einer der Messgrößen Stellgrößen, die dann in ein oder mehrere Stellsignale zum Steuern der Stellglieder mittels entsprechender Stellantriebe umgesetzt werden.

Die Sensoren sind beispielsweise die Temperatursensoren 16HT, 16LT und die Drucksensoren 15HP, 15LP auf der Hochdruckseite und der Niederdruckseite der Gasanlage, sowie weitere zur Steuerung der Brennkraftmaschine 1 nötige Sensoren wie ein Luftmassenmesser, welcher einen Luftmassenstrom stromaufwärts der Drosselklappe 4 erfasst, ein Saugrohrdrucksensor, Temperatursensoren, Drucksensoren für die Ansaugluft, ein Kurbelwellenwinkelsensor, welcher einen Kurbelwellenwinkel erfasst, dem dann eine Drehzahl zugeordnet wird und weitere für den Betrieb der Brennkraftmaschine 1 nötige Sensoren, deren Signale in der Figur allgemein mit dem Bezugszeichen ES angedeutet sind.

Die Stellglieder sind beispielsweise die Drosselklappe 4, die zentrale Dosiereinheit 8, und das Absperrventil 7. Weitere Signale für weitere Stellglieder, die zum Betreiben der Brennkraftmaschine 1 nötig sind, aber nicht explizit dargestellt sind, sind in der Figur allgemein mit dem Bezugszeichen AS gekennzeichnet.

Wie in der Figur 1 in strichlinierter Darstellung gezeigt, können die Drucksensoren 15HP, 15LP, die Temperatursensoren 16HT, 16LT, die zentrale Dosierstation 8 und die Verteileinrichtung 10 in einem Modul 35 zu einer baulichen Einheit zusammengefasst werden. Über die Verbindungsleitungen können auch für die Diagnose der einzelnen Komponenten wichtige Informationen zu der Steuereinrichtung 17 übertragen werden.

In dem beschriebenen Ausführungsbeispiel bildet die elektronische Steuereinheit 17 das zentrale Steuergerät für die mit Gas betriebene Brennkraftmaschine. Ist für die Brennkraftmaschine ein bivalenter Betrieb vorgesehen, d.h. die Brennkraftmaschine kann alternativ zum Gaskraftstoff noch mit einem weitern Kraftstoff, z.B. mit Benzin betrieben werden, so ist es vorteilhaft, dass die Steuereinrichtung 17, welche den Gasbetrieb der Brennkraftmaschine steuert, mit einer bidirektionalen Schnittstelle versehen sein, über die Daten und Signale mit dem Steuergerät für Benzinbetrieb ausgetauscht werden können. Die bidirektionale Schnittstelle wird zweckmäßigerweise als elektronischer Datenbus, z. B. als CAN-Bus, ausgeführt.

In der Figur 2 ist in schematischer Darstellung der Aufbau der zentralen Dosiereinheit 8 gezeigt. Sie weist als Stellglied einen von der Steuerungseinrichtung 17 der Brennkraftmaschine geregelten piezoelektrischen Aktor 20 auf. Dieser Aktor 20 ist mit einem Kolben 21 verbunden, wobei der Kolben die Fläche A1 aufweist. Der Kolben 21 ist in einem Zylinder 22 positioniert und ist über einen Stößel mit einem Ventil 23 verbunden. Das Ventil 23 weist eine Sitzfläche A2 auf. Der Zylinder 22 und der Kolben 21 bilden eine Arbeitskammer 24. An der Eingangsseite des Ventils 23 liegt der Hochdruck HP an, der dem Tankdruck des gespeicherten Gases entspricht.

Ausgangsseitig des Ventils 23, liegt das Druckniveau P2 der Arbeitskammer 24 an. Dem entsprechend wirkt auf den Kolben 21 die Kraft HP • A2 + P2 • (A1-A2). Die Arbeitskammer 24 mit dem Druck P2 ist mit einem zweiten Zylinder 25 verbunden, der Teil eines Servoventils 26 ist. In dem Zylinder 25 ist ein Kolben 27 mit der Fläche A3 geführt, der mit einem Ventil 28 mit der Sitzfläche A4 verbunden ist. Der Druck P2 lastet auf der Fläche A3. Der Stößel bzw. das Ventil 28 mit der Sitzfläche A4 bildet mit einer Trennfläche im Zylinder 25 eine abgeschlossene Kammer 29, die mit der Kammer HP verbunden ist. Zwischen A3 und A4 stellt sich der Niederdruck LP in der Ausgangskammer ein. Eine Drossel mit der Drosselfläche D2 verbindet die Arbeitskammer 24 mit der Ausgangskammer (Druck LP). Um den piezoelektrischen Aktor 20 regeln zu können, wird der Eingangsdruck HP und der Ausgangsdruck LP durch handelsübliche Drucksensoren gemessen (Figur 1).

Der piezoelektrische Aktor 20 verschiebt bei eingebrachter elektrischer Energie (Ansteuersignale der Steuereinrichtung 17) den Kolben 21 mit der Fläche A1. Durch die dadurch initiierte Bewegung des Ventils 23 kann Gas von der mit Hochdruck HP beaufschlagten Kammer in die Arbeitkammer 24 strömen.

Der Druck P2 steigt an. Der Kolben mit der Fläche A3 wird durch steigenden Druck P2 bewegt und das Ventil 28 mit der Fläche A4 und lässt Gas in die Kammer 29 fließen. Da die Arbeitskammer mit der Steuerkammer durch die Drossel verbunden ist, addiert sich der Gasstrom der Arbeitkammer mit dem Gasstrom, der durch die Drossel D2 abströmt. Der Gasstrom durch die Drossel D2 ist im Verhältnis zu dem Gasstrom durch die Arbeitskammer auslegungsbedingt gering. Der Einblasvorgang findet statt. Der Ausgangsdruck (Niederdruck) LP kann über die Flächenverhältnisse A1, A2, D2, A3 und A4 angepasst werden. Wird dem piezoelektrischen Aktor 20 die elektrische Energie entzogen, schließt das Ventil 23 mit der Fläche A2 die Arbeitkammer von HP ab. Je nach Auslegung der Drossel D2 kann die Dynamik des Schließvorganges beeinflusst werden. Bei einem größeren Drosseldurchmesser beschleunigt sich der Schließvorgang, weil der Druck in P2 schneller abfällt, da die Verbindungsleitung der Zylinder P2 mit der Drossel D2 parallel geschaltet ist. Dadurch schließt das Ventil 28 mit der Sitzfläche A4. Der Einblasvorgang in die Verteilereinheit 10 ist beendet.

Anstelle der beschriebenen zentralen Dosiereinheit mittels eines Piezostellgliedes kann auch ein elektromagnetisches Stellglied verwendet werden. Es ist nur nötig, dass die zentrale Dosiereinheit die Funktion eines Druckminderers übernimmt .

Eine solche Ausführung einer zentralen Dosiereinheit 8 hat den Vorteil, dass bei einem defekten piezoelektrischen Aktor 20 der Druckminderer geschlossen ist. Des Weiteren liegt in einer solchen Anordnung der Vorteil, dass die zentrale Dosiereinheit 8 an jeder beliebigen Position zwischen dem Gastank 5 und dem Verteiler 10 eingesetzt werden kann. Wird die zentrale Dosiereinheit 8 nahe des Gastanks 5 positioniert, so verringert sich die Länge der hochdruckfesten und somit kostenintensiven Gasleitungen zwischen Gastank 5 und Dosiereinheit 8.

Die beschriebene Vorrichtung lässt sich sowohl bei Kraftfahrzeugen einsetzen, die ausschließlich mit Gas betrieben werden oder die für bivalenten Betrieb, d.h. für Gasbetrieb und eine weitere Kraftstoffart, z.B. Benzin oder Diesel ausgelegt sind.

## Patentansprüche

1. Vorrichtung zur Kraftstoffversorgung für eine gasbetriebene, mehrere Zylinder (Z1-Z4) aufweisende Brennkraftmaschine (1) mit einem Gastank (5), in dem ein zum Betrieb der Brennkraftmaschine bestimmtes Gas unter hohem Druck (HP) gespeichert ist, mit einer Dosiereinheit (8), welche den Druck auf einen niederen Überdruck (LP) reduziert, und den Brennräumen zugeführt, wobei die Dosiereinheit (8) als zentrale Dosiereinheit für alle Zylinder (z1-Z4) ausgebildet ist, wobei der zentralen Dosiereinheit (8) eine, allen Zylindern (Z1-Z4) zugeordnete Verteilereinrichtung (10) nachgeschaltet ist und von der Verteilereinrichtung (10) einzelne, der Anzahl der Zylinder entsprechende separate Gasversorgungsleitungen (11-14) zu den Zylindern (Z1-Z4) abzweigen,
**dadurch gekennzeichnet, dass**
Drucksensoren (15HP, 15LP) und Temperatursensoren (16HT, 16LT) auf der Hochdruckseite und der Niederdruckseite des Gasversorgungssystems vorgesehen sind und diese Sensoren, sowie die zentrale Dosiereinheit (8) und die Verteilereinrichtung (10) zu einer baulichen Einheit (35) zusammengefasst sind.

2. Vorrichtung nach Anspruch 1, **dadurch gekennzeichnet, dass** die zentrale Dosiereinheit (8) ein piezoelektrisches Stellglied (20) aufweist, das die Entspannung und Dosierung des Gases übernimmt.

3. Vorrichtung nach Anspruch 5, **dadurch gekennzeichnet, dass** die zentrale Dosiereinheit (8) ein elektromagnetisches Stellgliedes aufweist, das die Entspannung und Dosierung des Gases übernimmt.

4. Vorrichtung nach Anspruch 5, **dadurch gekennzeichnet, dass** an den freien Enden dieser Gasversorgungsleitungen (11-14) Gaseinblasedüsen (30-34) vorgesehen sind und die Gaseinblasedüsen (30-34) in die einzelnen Saugrohre der Zylinder (Z1-Z4) ragen.

5. Vorrichtung nach Anspruch 1, **dadurch gekennzeichnet, dass** die zentrale Dosiereinheit (8) eine Gaseinblasedüse aufweist, mit der das Gas in die Verteilereinrichtung (10) eingebracht wird und die Gasversorgungsleitungen (11-14) in die einzelnen Saugrohre der Zylinder(Z1-Z4) ragen.

6. Vorrichtung nach einem der vorhergehenden Ansprüche, **dadurch gekennzeichnet, dass** die separaten Gasversorgungsleitungen (11-14) zu den einzelnen Zylindern (Z1-Z4) gleiche Längen aufweisen und als starre Leitungen oder als bewegliche Schlauchleitungen ausgebildet sind.

## Claims

1. Device for supplying fuel for a gas-operated, multicylinder (Z1-Z4) internal combustion engine (1), comprising a gas tank (5) in which a gas intended for operation of the internal combustion engine is stored under high pressure (HP), comprising a metering unit (8) which reduces the pressure to a low positive pressure (LP) and supplies the gas to the combustion chambers, wherein the metering unit (8) is embodied as a central metering unit for all of the cylinders (Z1-Z4), wherein a distributor device (10) assigned to all of the cylinders (Z1-Z4) is connected downstream of the central metering unit (8) and individual, separate gas supply lines (11-14) corresponding to the number of cylinders branch off from the distributor device (10) to the cylinders (Z1-Z4),
**characterised in that**
pressure sensors (15HP, 15LP) and temperature sensors (16HT, 16LT) are provided on the high-pressure side and low-pressure side of the gas supply system and said sensors together with the central metering unit (8) and the distributor device (10) are combined into one structural unit (35).

2. Device according to claim 1, **characterised in that** the central metering unit (8) has a piezoelectric actuating element (20) which controls the expansion and metering of the gas.

3. Device according to claim 5, **characterised in that** the central metering unit (8) has an electromagnetic actuating element which controls the expansion and metering of the gas.

4. Device according to claim 5, **characterised in that** gas injection nozzles (30-34) are provided at the free ends of said gas supply lines (11-14) and the gas injection nozzles (30-34) project into the individual intake pipes of the cylinders (Z1-Z4).

5. Device according to claim 1, **characterised in that** the central metering unit (8) has a gas injection nozzle by means of which the gas is introduced into the distributor device (10) and the gas supply lines (11-14) project into the individual intake pipes of the cylinders (Z1-Z4).

6. Device according to one of the preceding claims, **characterised in that** the separate gas supply lines (11-14) to the individual cylinders (Z1-Z4) have equal lengths and are embodied as rigid lines or as flexible hose lines.

## Revendications

1. Dispositif d'alimentation en carburant destiné à un moteur à combustion interne (1) fonctionnant au gaz et présentant plusieurs cylindres (Z1 à Z4), comprenant un réservoir à gaz (5), dans lequel est entreposé à pression élevée (HP) un gaz destiné au fonctionnement du moteur à combustion interne, avec une unité de dosage (8) qui réduit la pression à une basse surpression (LP) et qui alimente les chambres de combustion, dans lequel l'unité de dosage (8) se présente sous la forme d'une unité de dosage centrale pour tous les cylindres (Z1 à Z4), dans lequel un dispositif distributeur (10) affecté à tous les cylindres (Z1 à Z4) est disposé en aval de l'unité de dosage centrale (8) et des conduites d'alimentation en gaz (11 à 14) individuelles séparées correspondant au nombre de cylindres bifurquent du dispositif distributeur (10) vers les cylindres (Z1 à Z4), **caractérisé en ce qu'**il est prévu des capteurs de pression (15HP, 15LP) et des capteurs de température (16HT, 16LT) du côté haute pression et du côté basse pression du système d'alimentation en gaz et ces capteurs, ainsi que l'unité de dosage centrale (8) et le dispositif distributeur (10), sont groupés en une unité structurelle (35).

2. Dispositif selon la revendication 1, **caractérisé en ce que** l'unité de dosage centrale (8) présente un élément de réglage piézoélectrique (20) qui prend en charge la détente et le dosage du gaz.

3. Dispositif selon la revendication 5, **caractérisé en ce que** l'unité de dosage centrale (8) présente un élément de réglage électromagnétique qui prend en charge la détente et le dosage du gaz.

4. Dispositif selon la revendication 5, **caractérisé en ce qu'**aux extrémités libres de ces conduites d'alimentation en gaz (11 à 14), il est prévu des tuyères d'injection de gaz (30 à 34) et les tuyères d'injection de gaz (30 à 34) font saillie dans les tubes d'aspiration individuels des cylindres (Z1 à Z4).

5. Dispositif selon la revendication 1, **caractérisé en ce que** l'unité de dosage centrale (8) présente une tuyère d'injection de gaz, à l'aide de laquelle le gaz est introduit dans le dispositif distributeur (10) et les conduites d'alimentation en gaz (11 à 14) font saillie dans les tubes d'aspiration individuels des cylindres (Z1 à Z4).

6. Dispositif selon l'une quelconque des revendications précédentes, **caractérisé en ce que** les conduites d'alimentation en gaz séparées (11 à 14) menant aux cylindres individuels (Z1 à Z4) présentent des longueurs identiques et sont conformées en conduites rigides ou en conduites flexibles mobiles.
